Europäisches Patentamt

European Patent Office

Office européen des brevets

(11) Veröffentlichungsnummer: **0 192 198 B1**

# (12) EUROPÄISCHE PATENTSCHRIFT

(45) Veröffentlichungstag der Patentschrift: **19.12.90**

(21) Anmeldenummer: **86101890.1**

(22) Anmeldetag: **14.02.86**

(51) Int. Cl.$^5$: **C 08 F 279/04,** C 08 F 2/38, C 08 F 8/34, C 08 F 291/02

(54) **Schwefelhaltige Pfropfprodukte.**

(30) Priorität: **20.02.85 DE 3505778**

(43) Veröffentlichungstag der Anmeldung:
**27.08.86 Patentblatt 86/35**

(45) Bekanntmachung des Hinweises auf die Patenterteilung:
**19.12.90 Patentblatt 90/51**

(84) Benannte Vertragsstaaten:
**BE DE FR GB IT NL**

(56) Entgegenhaltungen:
**EP-A-0 084 882**
**FR-A-2 145 498**
**GB-A- 867 822**
**GB-A-1 199 672**
**US-A-2 888 442**

(73) Patentinhaber: **BAYER AG**
**D-5090 Leverkusen 1 Bayerwerk (DE)**

(72) Erfinder: **Eichenauer, Herbert, Dr.**
**Goethestr. 71**
**D-4047 Dormagen 1 (DE)**
Erfinder: **Pischtschan, Alfred, Dr.**
**Zur Eiche 33**
**D-5067 Kürten (DE)**
Erfinder: **Ott, Karl-Heinz, Dr.**
**Paul Klee-Str. 54**
**D-5090 Leverkusen 1 (DE)**

EP 0 192 198 B1

**Beschreibung**

Gegenstand der vorliegenden Erfindung sind schwefelhaltige elastisch-thermoplastische Pfropfprodukte mit terminalen Thioalkylgruppen, die einen Schwefelgehalt von 1,15 bis 3,95 Gew.-% besitzen und deren Thermoplastanteil der auf den Kautschuk polymerisierten Monomeren eine Grenzviskosität von 2 bis 15 ml/g (gemessen in DMF bei 25°C) aufweist.

ABS-Polymerisate besitzen eine gute Eigenschaftskombination aus hoher Kerbschlagzähigkeit, guter Chemikalienbeständigkeit und leichter Verarbeitbarkeit. Trotzdem kann es in speziellen Fällen, so z.B. bei ABS-Abmischungen mit hohem Kautschukgehalt zu einer für die Praxisanforderungen moderner Verarbeitungstechnologie nicht ausreichenden Fließfähigkeit des thermoplastischen Materials kommen. Abhilfe durch Zugabe niedermolekularer Fließhilfsmittel wie z.B. Ethylendiaminbisstearoylamid oder Calciumstearat führt oft zu Zähigkeitsverlusten, verminderter Wärmeformbeständigkeit oder zu einer Auswanderung des zugesetzten Gleitmittels.

Eine Verbesserung der Fließfähigkeit durch Erhöhung der Verarbeitungstemperatur läßt sich meist nur mit einem teilweisen thermooxidativen Abbau der Kautschukphase erkaufen.

Es bestand daher ein Bedarf an einem thermoplastischen Material, das zur Verbesserung der Fließfähigkeit von ABS-Thermoplastharzen eingesetzt werden kann, welches keine negativen Auswirkungen auf die ABS-Eigenschaften, insbesondere Zähigkeit und Wärmeformbeständigkeit, ausübt, und das einer thermooxidativen Zersetzung der Kautschukphase entgegenwirkt.

Gegenstand der Erfindung sind schwefelhaltige elastischthermoplastische Pfropfprodukte von Styrol, α-Methylstyrol, p-Methylstyrol, Vinyltoluol, Acrylnitril oder Methylmethacrylat oder Mischungen daraus auf teilchenförmigen Kautschuk mit einem mittleren Teilchendurchmesser ($d_{50}$) von 0,05 bis 20,0 μm, vorzugsweise 0,1 bis 1,0 μm und einer Glastemperatur $\leq$10°C mit einem Gesamtkautschukgehalt von 1 bis 80 Gew.-%, vorzugsweise von 10 bis 60 Gew.-%, wobei die Pfropfprodukte einen Schwefelgehalt von 1,15 bis 3,95 Gew.-%, vorzugsweise von 1,25 bis 2,40 Gew.-% besitzen, deren Thermoplastanteil der auf den teilchenförmigen Kautschuk polymerisierten Monomeren eine Grenzviskosität von 2 bis 15 ml/g, vorzugsweise von 3 bis 12 ml/g (gemessen in DMF bei 25°C) aufweist und bei denen mindestens 90 Gew.-% des eingebauten Schwefels als Bestandteil terminaler $C_{1-18}$-Thioalkylgruppen vorliegt.

Bevorzugte schwefelhaltige Pfropfprodukte sind solche, die mit ABS-Polymerisaten eine gute Verträglichkeit besitzen, insbesondere Produkte, die durch Co- oder Ter-polymerisation von (kern- oder seitenkettensubstituierten) Styrol-haltigen Monomergemischen in Gegenwart eines Polybutadiens erhalten werden.

Die Herstellung der erfindungsgemäßen Polymerisate kann durch Lösungs-, Suspensions- oder Emulsionspolymerisation oder durch Kombination dieser Verfahren in an sich bekannter Weise erfolgen, bevorzugt ist die Polymerisation in Emulsion.

Diese wird vorzugsweise unter Verwendung anionischer Emulgatoren wie z.B. Natrium-, Kalium- oder Ammoniumzsalze langkettiger Fettsäuren mit 10 bis 20 C-Atomen, z.B. Kaliumoleat, Alkylsulfate mit 10 bis 20 C-Atomen, Alkylarylsulfonate mit 10 bis 20 C-Atomen oder Alkali- bzw. Ammoniumsalze der disproportionierten Abietinsäure durchgeführt.

Die Pfropfreaktion kann in einem weiten Temperaturbereich durchgeführt werden, vorzugsweise erfolgt sie zwischen 30°C und 100°C, besonders bevorzugt zwischen 50° und 80°C.

Geeignete radikalbildende Initiatoren sind organische und anorganische Peroxide, anorganische Persulfate wie z.B. Kaliumpersulfat, Azoinitiatoren wie. z.B. Azobisisobutyronitril, sowie Redox-Systeme, die aus einem Oxidationsmittel, vorzugsweise einem Peroxid, und einem Reduktionsmittel bestehen.

Als bevorzugter Initiator wird Kaliumpersulfat eingesetzt, die Einsatzmengen betragen zwischen 0,1 und 0,5 Gew.-%.

Als Kautschukgrundlagen werden in Emulsionsform vorliegende teilchenförmige Kautschuke mit einem mittleren Teilchendurchmesser ($d_{50}$) von 0,05 bis 20,0 μm, vorzugsweise 0,1 bis 1,0 μm und einer Glastemperatur $\leq$10°C verwendet. Beispiele für einsetzbare Kautschuke sind Polybutadien, Polyisopren, Styrol-Butadien-Copolymerisate, Acrylnitril-Butadien-Copolymerisate, Acrylkautschuke, EPM-Kautschuke (Ethylen/Propylen-Kautschuke) und EPDM-Kautschuke (Ethylen/Propylen/Dien-Kautschuke, die als Dien ein nichtkonjugiertes Dien wie z.B. Hexadien-1,5 oder Norbornadien in kleinen Mengen enthalten). Die mittleren Teilchendurchmesser werden mittels Ultrazentrifuge (vergl. W. Scholtan, H. Lange: Kolloid-Z. u.Z. Polymere 250, S. 782—796 (1972)) bestimmt.

Die Einführung der terminalen Thioalkylgruppen erfolgt durch Pfropfreaktion eines Gemisches aus Monomeren und $C_{1-18}$-Alkylmercaptan in Gegenwart der Pfropfkautschukgrundlage, wobei das als Kettenüberträger wirkende Mercaptan als endständige Thioalkylgruppe eingebaut wird.

Dabei muß der durch die endständigen Thioalkylgruppen eingebrachte Schwefelgehalt mindestens 90 Gew.-% des im Polymerisat insgesamt vorhandenen Schwefels betragen. Der Gehalt an eventuell sonst noch im Polymeren vorhandenem Schwefel, beispielsweise durch Einbau von Initiatorbruchstücken oder durch Pfropfreaktion von schwefelhaltigen Emulgatoren eingebracht, beträgt wenigen als 10 Gew.-% des Gesamtschwefelgehalts im Polymerisat.

Beispiele für einsetzbare $C_{1-18}$-Alkylmercaptane sind Ethylmercaptan, n-Propylmercaptan, n-Butylmercaptan, tert.-Butylmercaptan, n-Pentylmercaptan, n-Hexylmercaptan, n-Octylmercaptan, n-Decyl-

2

mercaptan, n-Dodecylmercaptan, tert.-Dodecylmercaptan, n-Hexadecylmercaptan und n-Octadecylmercaptan.

Bevorzugte Alkylmercaptan sind tert.-Dedecylmercaptan und n-Dodecylmercaptan bzw. deren Gemische.

Die Pfropfprodukte besitzen einen Kautschukgehalt von 1 bis 80 Gew.-%, insbesondere 10 bis 60 Gew.-%, die Gelgehalte, gemessen in Aceton bei 25°C, betragen 5 bis 95 Gew.-%, insbesondere 20 bis 80 Gew.-%.

Im Folgenden werden bevorzugte Ausführungsformen der erfindungsgemäßen Thermoplasten beschrieben:

(A) Schwefelhaltiges elastisch-thermoplastisches Pfropfprodukt, das durch Pfropfreaktion eines Gemisches aus

a) 50 bis 80 Gew.-Teilen, vorzugsweise 55 bis 75 Gew.-Teilen ($\alpha$-Methyl)Styrol und/oder p-Methylstyrol bzw. Vinyltoluol,

b) 10 bis 30 Gew.-Teilen, vorzugsweise 15 bis 27,5 Gew.-Teilen (Meth)Acrylnitril und

c) sovielen Gew-Teilen eines $C_{1-18}$-Alkylmercaptans oder Mischungen daraus, die einen Schwefelgehalt von 1,15 bis 3,95 Gew.-% im Polymerisat hervorrufen, auf

d) 10 bis 200 Gew.-Teile Polybutadien hergestellt worden ist.

(B) Schwefelhaltiges elastisch-thermoplastisches Pfropfprodukt, das durch Pfropfreaktion eines Gemisches aus

a) 50 bis 80 Gew.-Teilen, vorzugsweise 55 bis 75 Gew.-Teilen ($\alpha$-Methyl)Styrol und/oder p-Methylstyrol bzw. Vinyltoluol,

b) 10 bis 30 Gew.-Teilen, vorzugsweise 15 bis 27,5 Gew.-Teilen (Meth)Acrylnitril und

c) 7,5 bis 25 Gew.-Teilen vorzugsweise 8 bis 15 Gew-Teilen tert.-Dodecylmercaptan und/oder n-Dodecylmercaptan bzw. deren Gemische auf

d) 10 bis 200 Gew.-Teile Polybutadien hergestellt worden ist.

(C) Schwefelhaltiges elastisch-thermoplastisches Pfropfprodukt, das durch Pfropfreaktion eines Gemisches aus

a) 25 bis 75 Gew.-Teilen, vorzugsweise 30 bis 70 Gew.-Teilen ($\alpha$-Methyl)Styrol und/oder p-Methylstyrol bzw. Vinyltoluol,

b) 25 bis 75 Gew.-Teilen, vorzugsweise 30 bis 70 Gew.-Teilen Methylmethacrylat und

c) sovielen Gew-Teilen eines $C_{1-18}$-Alkylmercaptans oder Mischungen daraus, die einen Schwefelgehalt von 1,15 bis 3,95 Gew.-% im Polymerisat hervorrufen, auf

d) 10 bis 200 Gew.-Teile Polybutadien hergestellt worden ist.

(D) Schwefelhaltiges elastisch-thermoplastisches Pfropfprodukt, das durch Pfropfreaktion eines Gemisches aus

a) 25 bis 75 Gew.-Teilen, vorzugsweise 30 bis 70 Gew.-Teilen ($\alpha$-Methyl)Styrol und/oder p-Methylstyrol bzw. Vinyltoluol,

b) 25 bis 75 Gew.-Teilen, vorzugsweise 30 bis 70 Gew.-Teilen Methylmethacrylat und

c) 7,5 bis 25 Gew.-Teilen vorzugsweise 8 bis 15 Gew-Teilen tert.-Dodecylmercaptan und/oder n-Dodecylmercaptan bzw. deren Gemische auf

d) 10 bis 200 Gew.-Teile Polybutadien hergestellt worden ist.

(E) Schwefelhaltiges elastisch-thermoplastisches Pfropfprodukt, das durch Pfropfreaktion eines Gemisches aus

a) 10 bis 60 Gew.-Teilen, vorzugsweise 20 bis 50 Gew.-Teilen ($\alpha$-Methyl)Styrol und/oder p-Methylstyrol bzw. Vinyltoluol,

b) 10 bis 60 Gew.-Teilen, vorzugsweise 15 bis 50 Gew.-Teilen Methylmethacrylat,

c) 10 bis 30 Gew.-Teilen, vorzugsweise 15 bis 27,5 Gew-Teilen (Meth)Acrylnitril und

d) sovielen Gew-Teilen eines $C_{1-18}$-Alkylmercaptans oder Mischungen daraus, die einen Schwefelgehalt von 1,15 bis 3,95 Gew.-% im Polymerisat hervorrufen, auf

e) 10 bis 200 Gew.-Teile Polybutadien hergestellt worden ist.

(F) Schwefelhaltiges elastisch-thermoplastisches Pfropfprodukt, das durch Pfropfreaktion eines Gemisches aus

a) 10 bis 60 Gew.-Teilen, vorzugsweise 20 bis 50 Gew.-Teilen ($\alpha$-Methyl)Styrol und/oder p-Methylstyrol bzw. Vinyltoluol,

b) 10 bis 60 Gew.-Teilen, vorzugsweise 15 bis 50 Gew.-Teilen Methylmethacrylat,

c) 10 bis 30 Gew.-Teilen, vorzugsweise 15 bis 27,5 Gew-Teilen (Meth)Acrylnitril und

d) 7,5 bis 25 Gew.-Teilen vorzugsweise 8 bis 15 Gew-Teilen tert.-Dodecylmercaptan und/oder n-Dodecylmercaptan bzw. deren Gemische auf

e) 10 bis 200 Gew.-Teile Polybutadien hergestellt worden ist.

3

(G) Schwefelhaltiges elastisch-thermoplastisches Pfropfprodukt, das durch Pfropfreaktion eines Gemisches aus

    a) 50 bis 80 Gew.-Teilen, vorzugsweise 55 bis 75 Gew.-Teilen Methylmethacrylat,

    b) 10 bis 30 Gew.-Teilen, vorzugsweise 15 bis 27,5 Gew.-Teilen (Meth)Acrylnitril und

    c) sovielen Gew-Teilen eines $C_{1-18}$-Alkylmercaptans oder Mischungen daraus, die einen Schwefelgehalt von 1,15 bis 3,95 Gew.-% im Polymerisat hervorrufen, auf

    d) 10 bis 200 Gew.-Teile Polybutadien hergestellt worden ist.

(H) Schwefelhaltiges elastisch-thermoplastisches Pfropfprodukt, das durch Pfropfreaktion eines Gemisches aus

    a) 50 bis 80 Gew.-Teilen, vorzugsweise 55 bis 75 Gew.-Teilen Methylmethacrylat,

    b) 10 bis 30 Gew.-Teilen, vorzugsweise 15 bis 27,5 Gew.-Teilen (Meth)Acrylnitril und

    c) 7,5 bis 25 Gew.-Teilen tert.-Dodecylmercaptan und/oder n-Dodecylmercaptan bzw. deren Gemische auf

    d) 10 bis 200 Gew.-Teile Polybutadien

hergestellt worden ist.

Ein besonderes Verfahren zur Herstellung schwefelhaltiger elastischthermoplastischer Pfropfprodukte aus Styrol α-Methylstyrol, p-Methylstyrol, Vinyltoluol, Acrylnitril oder Methylmethacrylat oder Mischungen daraus auf einen teilchenförmigen Kautschuk mit einem mittleren Teilchendurchmesser ($d_{50}$) von 0,05 bis 20,0 µm und einer Glastemperatur ≤10°C mit einem Gesamtkautschukgehalt von 1 bis 80 Gew.-%, wobei der Thermoplastanteil der auf den teilchenförmigen Kautschuk polymerisierten Monomeren eine Grenzviskosität von 2 bis 15 ml/g (gemessen in Dimethylformamid bei 25°C) aufweist, ist dadurch gekennzeichnet, daß die Pfropfreaktion in Gegenwart eines $C_{1-18}$-Alkylmercaptans oder Mischungen daraus in Mengen von $(0,503 \cdot x + 1,222)$ Gew.-% bis $(1,728 \cdot x + 4,197)$ Gew.-% (bezogen auf Summe aus Kautschukgrundlage, Monomer- und Mercaptanmenge) durchgeführt wird, wobei x die Anzahl der C-Atome im Alkylmercaptan bedeutet.

die Grenzviskosität des Thermoplastanteils der auf den teilchenförmigen Kautschuk polymerisierten Monomeren ist gemäß den Untersuchungen von Dinges et. al.; (Makromol. Chemie *101,* S. 200—213 (1967)) identisch mit der Grenzviskosität des bei der Pfropfreaktion "nebenher" entstehenden, nicht chemische gebundenen Polymermaterials, so daß die Bestimmung der Grenzviskosität einfacher an diesem löslichen Material vorgenommen werden kann.

Die erfindungsgemäßen schwefelhaltigen Pfropfprodukte, deren Thermoplastanteil der auf den teilchenförmigen Kautschuk polymerisierten Monomeren eine Grenzviskosität von 2 bis 15 ml/g (gemessen in DMF bei 25°C) aufweist, eignen sich als Mittel zur Verbesserung der Fließfähigkeit von ABS-Polymerisaten bei der thermoplastischen Verarbeitung. Dabei werden sie den ABS-Polymerisaten in Mengen von 0,5 bis 15 Gew.-%, vorzugsweise von 1 bis 10 Gew.-% und besonders bevorzugt von 1,5 bis 7,5 Gew.-% zugesetzt. Aufgrund ihres Gehaltes an endständigen Thioalkylgruppen zeigen sie zum einen eine gute Wirksamkeit als Sauerstoffänger, wobei die Thioethergruppierung in Sulfoxid- oder Sulfongruppierungen überführt wird, zum anderen trägt die Alkylgruppe, insbesondere eine längerkettige Gruppierung wie z.B. der Dodecylrest, zu einer erhöhten Wirksamkeit als Fließfähigkeitsverbesserer bei.

## Beispiele

In den nachfolgenden Beispielen wird die Erfindung näher erläutert. Die angegebenen Teile sind Gewichtsteile und beziehen sich immer auf Festbestandteile bzw. polymerisierbare Bestandteile.

## Beispiel 1

50 Teile Polybutadien (in Form eines Latex mit einem Feststoffgehalt von 25 Gew.-%) mit einer mittleren Teilchengröße von 0,4 µm werden unter Stickstoff auf 65°C erwärmt, wonach 0,5 Teile Kaliumpersulfat (gelöst in 20 Teilen Wasser) zugegeben werden. Anschließend werden ein Gemisch aus 25,2 Teilen Styrol, 9,8 Teilen Acrylnitril und 15 Teilen tert.-Dodecylmercaptan sowie 2 Teile des Natriumsalzes der disproportionierten Abtietinsäure (gelöst in 25 Teilen Wasser) innerhalb 4 Stunden zudosiert, wobei die Pfropfreaktion erfolgt. Nach einer Nachreaktionszeit wird der Latex in einer kalten Magnesiumsulfat/Essigsäure-Lösung koaguliert. Das nach Trocknung bei 70°C im Vakuum in einer Ausbeute von 96% erhaltene Polymerisat besitzt einen Schwefelgehalt von 2,25%.

Anschließend wird das Polymerisat in einer Soxhlet-Apparatur mit Methylethylketon 24 Stunden lang extrahiert. Die Lösung wird eingeengt, wonach das Lösungsmittel im Vakuum vollständig entfernt wird. Das zurückbleibende Polymerisat besitzt eine Grenzviskosität von 5,4 ml/g (gemessen in DMF bei 25°C).

## Beispiel 2

20 Teile Polybutadien (in Form eines Latex mit einem Feststoffgehalt von 11,5 Gew.-%) mit einer mittleren Teilchengröße von 0,4 µm werden unter Stickstoff auf 65°C erwärmt, wonach 0,5 Teile Kaliumpersulfat (gelöst in 20 Teilen Wasser) zugegeben werden. Anschließend werden ein Gemisch aus 46,8 Teilen Styrol, 18,2 Teilen Acrylnitril und 15 Teilen tert.-Dodecylmercaptan sowie 2 Teile des Natriumsalzes der disproportionierten Abtietinsäure (gelöst in 25 Teilen Wasser) innerhalb 4 Stunden zudosiert, wobei die Pfropfreaktion erfolgt. Nach einer Nachreaktionszeit wird der Latex in einer kalten Magnesiumsulfat/Essigsäure-Lösung koaguliert. Das nach Trocknung bei 70°C im Vakuum in einer Ausbeute von 97% erhaltene Polymerisat besitzt einen Schwefelgehalt von 2,3%.

Anschließend wird das Polymerisat in einer Soxhlet-Apparatur mit Methylethylketon 24 Stunden lang extrahiert. Die Lösung wird eingeengt, wonach das Lösungsmittel im Vakuum vollständig entfernt wird. Das zurückbleibende Polymerisat besitzt eine Grenzviskosität von 6,1 ml/g (gemessen in DMF bei 25°C).

### Beispiel 3 (Anwendung)

Ein ABS-Polymerisat, bestehend aus 40 Gew.-Teilen eines Pfropfpolymerisats von 36 Gew.-Teilen Styrol und 14 Gew.-Teilen Acrylnitril auf 50 Gew.-Teile eines Polybutadiens mit einem mittleren Teilchendurchmesser ($d_{50}$) von 0,3 µm und 60 Gew.-Teilen eines Styrol-Acrylnitril-Copolymerisats aus 72 Gew.-Teilen Styrol und 28 Gew.-Teilen Acrylnitril mit einem $M_w$-Wert von ca. 80 000 ($M_w/M_n$-1 $\leq$ 2,0) wurde mit 5 Gew.-Teilen des Polymerisats aus Beispiel 1 versetzt und bei 240°C durch Spritzgießen zu einer Spirale von ca. 8 mm Breite und ca. 2 mm Stärke verarbeitet. Die Spirallänge betrug 52 cm.

DSC-Messungen an dem pulverförmigen ABS-Polymerisat unter Verwendung eines DSC 2-Meßgerätes der Firma Perkin-Elmer ergaben bei der isothermen Messung bei 160°C (Spülgas Sauerstoff 3,6 l/h) eine Induktionszeit bis zur maximalen Oxidationsrate von 70,5 min. Bei der dynamischen Messung (Spülgas Sauerstoff 3,6 l/h, Heizrate 20 K/min) lag das Maximum der exothermen Reaktion bei T = 217°C.

### Beispiel 4 (Vergleich)

Das in Beispiel 3 beschriebene ABS-Polymerisat wurde ohne Zusatz des Polymerisats aus Beispiel 1 unter den gleichen Bedingungen verarbeitet. Die Spirallänge betrug 47 cm.

DSC-Messungen unter gleichen Bedingungen ergaber für die isotherme Messung bei 160°C eine Induktionszeit bis zur maximalen Oxidationsrate von 3,8 Minuten. Bei der dynamischen Messung lag das Maximum der exothermen Reaktion bei T = 190,5°C.

## Patentansprüche

1. Schwefelhaltige elastisch-thermoplastische Pfropfprodukte aus Styrol, α-Methylstyrol, p-Methylstyrol, Vinyltoluol, Acrylnitril oder Methylmethacrylat oder Mischungen daraus auf einen teilchenförmigen Kautschuk mit einem mittleren Teilchendurchmesser ($d_{50}$) von 0,05 bis 20,0 µm und einer Glastemperatur $\leq$10°C mit einem Gesamtkautschukgehalt von 1 bis 80 Gew.-%, wobei die Pfropfprodukte einen Schwefelgehalt von 1,15 bis 3,95 Gew.-% besitzen und der Thermoplastanteil der auf den teilchenförmigen Kautschuk polymerisierten Monomeren eine Grenzviskosität von 2 bis 15 ml/g (gemessen in Dimethylformamid bei 25°C) aufweist und bei denen mindestens 90 Gew.-% des eingebauten Schwefels als Bestandteil terminaler $C_{1-18}$-Thioalkylgruppen vorliegt.

2. Schwefelhaltiges elastisch-thermoplastisches Pfropfprodukt gemäß Anspruch 1, dadurch gekennzeichnet, daß es durch Pfropfreaktion eines Gemisches aus

a) 50 bis 80 Gew.-Teilen, vorzugsweise 55 bis 75 Gew.-Teilen (α-Methyl)Styrol und/oder p-Methylstyrol bzw. Vinyltoluol,

b) 10 bis 30 Gew.-Teilen, vorzugsweise 15 bis 27,5 Gew.-Teilen (Meth)Acrylnitril und

c) sovielen Gew-Teilen eines $C_{1-18}$-Alkylmercaptans oder Mischungen daraus, die einen Schwefelgehalt von 1,15 bis 3,95 Gew.-% im Polymerisat hervorrufen, auf

d) 10 bis 200 Gew.-Teile Polybutadien hergestellt worden ist.

3. Schwefelhaltiges elastisch-thermoplastisches Pfropfprodukt gemäß Anspruch 2, dadurch gekennzeichnet, daß es durch Pfropfreaktion eines Gemisches aus

a) 50 bis 80 Gew.-Teilen, vorzugsweise 55 bis 75 Gew.-Teilen (α-Methyl)Styrol und/oder p-Methylstyrol bzw. Vinyltoluol,

b) 10 bis 30 Gew.-Teilen, vorzugsweise 15 bis 27,5 Gew.-Teilen (Meth)Acrylnitril und

c) 7,5 bis 25 Gew.-Teilen vorzugsweise 8 bis 15 Gew-Teilen tert.-Dodecylmercaptan und/oder n-Dodecylmercaptan bzw. deren Gemische auf

d) 10 bis 200 Gew.-Teile Polybutadien hergestellt worden ist.

4. Schwefelhaltiges elastisch-thermoplastisches Pfropfprodukt gemäß Anspruch 1, dadurch gekennzeichnet, daß es durch Pfropfreaktion eines Gemisches aus

a) 25 bis 75 Gew.-Teilen, vorzugsweise 30 bis 70 Gew.-Teilen (α-Methyl)Styrol und/oder p-Methylstyrol bzw. Vinyltoluol,

b) 25 bis 75 Gew.-Teilen, vorzugsweise 30 bis 70 Gew.-Teilen Methylmethacrylat und

c) sovielen Gew-Teilen eines $C_{1-18}$-Alkylmercaptans oder Mischungen daraus, die einen Schwefelgehalt von 1,15 bis 3,95 Gew.-% im Polymerisat hervorrufen, auf

d) 10 bis 200 Gew.-Teile Polybutadien hergestellt worden ist.

5. Schwefelhaltiges elastisch-thermoplastisches Pfropfprodukt gemäß Anspruch 4, dadurch gekennzeichnet, daß es durch Pfropfreaktion eines Gemisches aus

a) 25 bis 75 Gew.-Teilen, vorzugsweise 30 bis 70 Gew.-Teilen (α-Methyl)Styrol und/oder p-Methylstyrol bzw. Vinyltoluol,

b) 25 bis 75 Gew.-Teilen, vorzugsweise 30 bis 70 Gew.-Teilen Methylmethacrylat und

c) 7,5 bis 25 Gew.-Teilen vorzugsweise 8 bis 15 Gew-Teilen tert.-Dodecylmercaptan und/oder n-Dodecylmercaptan bzw. deren Gemische auf

d) 10 bis 200 Gew.-Teile Polybutadien hergestellt worden ist.

6. Schwefelhaltiges elastisch-thermoplastisches Pfropfprodukt gemäß Anspruch 1, dadurch gekennzeichnet, daß es durch Pfropfreaktion eines Gemisches aus

a) 10 bis 60 Gew.-Teilen, vorzugsweise 20 bis 50 Gew.-Teilen (α-Methyl)Styrol und/oder p-Methylstyrol bzw. Vinyltoluol,

b) 10 bis 60 Gew.-Teilen, vorzugsweise 15 bis 50 Gew.-Teilen Methylmethacrylat,

c) 10 bis 30 Gew.-Teilen, vorzugsweise 15 bis 27,5 Gew-Teilen (Meth)Acrylnitril und

d) sovielen Gew-Teilen eines $C_{1-18}$-Alkylmercaptans oder Mischungen daraus, die einen Schwefelgehalt von 1,15 bis 3,95 Gew.-% im Polymerisat hervorrufen, auf

e) 10 bis 200 Gew.-Teile Polybutadien hergestellt worden ist.

7. Schwefelhaltiges elastisch-thermoplastisches Pfropfprodukt gemäß Anspruch 6, dadurch gekennzeichnet, daß es durch Pfropfreaktion eines Gemisches aus

a) 10 bis 60 Gew.-Teilen, vorzugsweise 20 bis 50 Gew.-Teilen (α-Methyl)Styrol und/oder p-Methylstyrol bzw. Vinyltoluol,

b) 10 bis 60 Gew.-Teilen, vorzugsweise 20 bis 50 Gew.-Teilen Methylmethacrylat,

c) 10 bis 30 Gew.-Teilen, vorzugsweise 15 bis 27,5 Gew.-Teilen (Meth)Acrylnitril und

d) 7,5 bis 25 Gew.-Teilen vorzugsweise 8 bis 15 Gew-Teilen tert.-Dodecylmercaptan und/oder n-Dodecylmercaptan bzw. deren Gemische auf

e) 10 bis 200 Gew.-Teile Polybutadien hergestellt worden ist.

8. Schwefelhaltiges elastisch-thermoplastisches Pfropfprodukt gemäß Anspruch 1, dadurch gekennzeichnet, daß es durch Pfropfreaktion eines Gemisches aus

a) 50 bis 80 Gew.-Teilen, vorzugsweise 55 bis 75 Gew.-Teilen Methylmethacrylat,

b) 10 bis 30 Gew.-Teilen, vorzugsweise 15 bis 27,5 Gew.-Teilen (Meth)Acrylnitril und

c) sovielen Gew-Teilen eines $C_{1-18}$-Alkylmercaptans oder Mischungen daraus, die einen Schwefelgehalt von 1,15 bis 3,95 Gew.-% im Polymerisat hervorrufen, auf

d) 10 bis 200 Gew.-Teile Polybutadien hergestellt worden ist.

9. Schwefelhaltiges elastisch-thermoplastisches Pfropfprodukt gemäß Anspruch 2, dadurch gekennzeichnet, daß es durch Pfropfreaktion eines Gemisches aus

a) 50 bis 80 Gew.-Teilen, vorzugsweise 55 bis 75 Gew.-Teilen Methylmethacrylat,

b) 10 bis 30 Gew.-Teilen, vorzugsweise 15 bis 27,5 Gew.-Teilen (Meth)Acrylnitril und

c) 7,5 bis 25 Gew.-Teilen tert.-Dodecylmercaptan und/oder n-Dodecylmercaptan bzw. deren Gemische auf

d) 10 bis 200 Gew.-Teile Polybutadien hergestellt worden ist.

10. Verwendung der schwefelhaltigen elastisch-thermoplastischen Pfropfprodukte gemäß den Ansprüchen 1 bis 9 als Mittel zur Verbesserung der Fließfähigkeit und zum Schutz gegen thermooxidative Schädigung für ABS-Polymerisate.

11. Verfahren zur Herstellung schwefelhaltiger elastischthermoplastischer Pfropfprodukte aus Styrol, α-Methylstyrol, p-Methylstyrol, Vinyltoluol, Acrylnitril oder Methylmethacrylat oder Mischungen daraus auf einen teilchenförmigen Kautschuk mit einem mittleren Teilchendurchmesser ($d_{50}$) von 0,05 bis 20,0 µm, und einer Glastemperatur ≤10°C mit einem Gesamtkautschukgehalt von 1 bis 80 Gew.-%, wobei der Thermoplastanteil der auf den teilchenförmigen Kautschuk polymerisierten Monomeren eine Grenzviskosität von 2 bis 15 ml/g, (gemessen in Dimethylformamid bei 25°C) aufweist, dadurch gekennzeichnet, daß die Pfropfreaktion in Gegenwart eines $C_{1-18}$-Alkylmercaptans oder Mischungen daraus in Mengen von $(0,503 \cdot x + 1,222)$ Gew.-% bis $(1,728 \cdot x + 4,197)$ Gew.-% (bezogen auf Summe aus Kautschukgrundlage, Monomer- und Mercaptanmenge) polymerisiert wird, wobei x die Anzahl der C-Atome im Alkylmercaptan bedeutet.

**Revendications**

1. Produits élastiques-thermoplastiques greffés contenant du soufre obtenus par greffage de styrène, α-méthylstyrène, p-méthylstyrène, vinyltoluène, acrylonitrile ou méthacrylate de méthyle ou des mélanges de ces composés sur un caoutchouc en particules avec un diamètre moyen des particules ($d_{50}$) de 0,05 à 20,0 µm et une température de transition vitreuse inférieure ou égale à 10°C, avec un teneur totale en caoutchouc de 1 à 80% en poids, les produits de greffage possédant une teneur en soufre de 1,15 à 3,95% et la part des thermoplastes des monomères polymérisés sur le caoutchouc en particules présentant une viscosité limite de 2 à 15 ml/g (mesurée dans le diméthylformamide à 25°C) et dans lesquels au moins 90% en poids du soufre incorporé est présent sous forme de groupes thioalkyle en $C_{1-18}$ terminaux.

2. Produit de greffage élastique-thermoplastique contenant du soufre selon la revendication 1, caractérisé en ce qu'il a été fabriqué par réaction de greffage d'un mélange de

a) 50 à 80 parties en poids, de préférence 55 à 75 parties en poids de (α-méthyl)styrène et/ou de p-méthylstyrène ou de vinyltoluène,

b) 10 à 30 parties en poids, de préférence 15 à 27,5 parties en poids de (méth)acrylonitrile et

c) un nombre de parties en poids d'un alkylmercaptan en $C_{1-18}$ ou de ses mélanges tel qu'il produit une teneur en soufre de 1,15 à 3,95% en poids dans le polymère, sur

d) 10 à 200 parties en poids de polybutadiène.

3. Produit de greffage élastique-thermoplastique contenant du soufre selon la revendication 2, caractérisé en ce qu'il a été fabriqué par réaction de greffage d'un mélange de

a) 50 à 80 parties en poids, de préférence 55 à 75 parties en poids de (α-méthyl)styrène et/ou de p-méthylstyrène ou de vinyltoluène,

b) 10 à 30 parties en poids, de préférence 15 à 27,5 parties en poids de (méth)acrylonitrile et

c) 7,5 à 25 parties en poids, de préférence 8 à 15 parties en poids de dodécylmercaptan tertiaire et/ou de n-dodécylmercaptan ou leurs mélanges sur

d) 10 à 200 parties en poids de polybutadiène.

4. Produit de greffage élastique-thermoplastique contenant du soufre selon la revendication 1, caractérisé en ce qu'il a été fabriqué par réaction de greffage d'un mélange de

a) 25 à 75 parties en poids, de préférence 30 à 70 parties en poids de (α-méthyl)styrène et/ou de p-méthylstyrène ou de vinyltoluène,

b) 25 à 75 parties en poids, de préférence 30 à 70 parties en poids de méthacrylate de méthyle et

c) un nombre de parties en poids d'un alkylmercaptan en $C_{1-18}$ ou de ses mélanges tel qu'il produit une teneur en soufre de 1,15 à 3,95% en poids dans le polymère, sur

d) 10 à 200 parties en poids de polybutadiène.

5. Produit de greffage élastique-thermoplastique contenant du soufre selon la revendication 4, caractérisé en ce qu'il a été fabriqué par réaction de greffage d'un mélange de

a) 25 à 75 parties en poids, de préférence 30 à 70 parties en poids de (α-méthyl)styrène et/ou de p-méthylstyrène ou de vinyltoluène,

b) 25 à 75 parties en poids, de préférence 30 à 70 parties en poids de méthacrylate de méthyle et

c) 7,5 à 25 parties en poids, de préférence 8 à 15 parties en poids de dodécylmercaptan tertiaire et/ou de n-dodécylmercaptan ou leurs mélanges sur

d) 10 à 200 parties en poids de polybutadiène.

6. Produit de greffage élastique-thermoplastique contenant du soufre selon la revendication 1, caractérisé en ce qu'il a été fabriqué par réaction de greffage d'un mélange de

a) 10 à 60 parties en poids, de préférence 20 à 50 parties en poids de (α-méthyl)styrène et/ou de p-méthylstyrène ou de vinyltoluène,

b) 10 à 60 parties en poids, de préférence 20 à 50 parties en poids de méthacrylate de méthyle,

c) 10 à 30 parties en poids, de préférence 15 à 27,5 parties en poids de (méth)acrylonitrile et

d) un nombre de parties en poids d'un alkylmercaptan en $C_{1-18}$ ou de ses mélanges tel qu'il produit une teneur en soufre de 1,15 à 3,95% en poids dans le polymère, sur

e) 10 à 200 parties en poids de polybutadiène.

7. Produit de greffage élastique-thermoplastique contenant du soufre selon la revendication 6, caractérisé en ce qu'il a été fabriqué par réaction de greffage d'un mélange de

a) 10 à 60 parties en poids, de préférence 20 à 50 parties en poids de (α-méthyl)styrène et/ou de p-méthylstyrène ou de vinyltolue,

b) 10 à 60 parties en poids, de préférence 20 à 50 parties en poids de méthacrylate de méthyle,

c) 10 à 30 parties en poids, de préférence 15 à 27,5 parties en poids de (méth)acrylonitrile et

c) 7,5 à 25 parties en poids, de préférence 8 à 15 parties en poids de dodécylmercaptan tertiaire et/ou de n-dodécylmercaptan ou leurs mélanges sur

d) 10 à 200 parties en poids de polybutadiène.

8. Produit de greffage élastique-thermoplastique contenant du soufre selon la revendication 1, caractérisé en ce qu'il a été fabriqué par réaction de greffage d'un mélange de

a) 50 à 80 parties en poids, de préférence 55 à 75 parties en poids de méthacrylate de méthyle,

b) 10 à 30 parties en poids, de préférence 15 à 27,5 parties en poids de (méth)acrylonitrile, et

c) un nombre de parties en poids d'un alkylmercaptan en $C_{1-18}$ ou de ses mélanges tel qu'il produit une teneur en soufre de 1,15 à 3,95% en poids dans le polymère, sur

d) 10 à 200 parties en poids de polybutadiène.

9. Produit de greffage élastique-thermoplastique contenant du soufre selon la revendication 8, caractérisé en ce qu'il a été fabriqué par réaction de greffage d'un mélange de

a) 50 à 80 parties en poids, de préférence 55 à 75 parties en poids de méthacrylate de méthyle,

b) 10 à 30 parties en poids, de préférence 15 à 27,5 parties en poids de (méth)acrylonitrile, et

c) 7,5 à 25 parties en poids de dodécylmercaptan tertiaire et/ou de n-dodécylmercaptan ou leurs mélanges sur

d) 10 à 200 parties en poids de polybutadiène.

10. Application des produits de greffage élastiques-thermoplastiques contenant du soufre selon les revendications 1 à 9 comme agents pour améliorer la fluidité des polymères ABS et les protéger contre la déterioration par thermo-oxydation.

11. Procédé pour la fabrication de produits élastiques-thermoplastiques de greffage de styrène, α-méthylstyrène, p-méthylstyrène, vinyltoluène, acrylonitrile ou méthacrylate de méthyle ou des mélanges de ces composés sur un caoutchouc en particules avec un diamètre moyen des particules ($d_{50}$) de 0,05 à 20,0 µm et une température de transition vitreuse inférieure ou égale à 10°C, avec une teneur totale en caoutchouc de 1 à 80% en poids, la part des thermoplastes des monomères polymérisés sur le caoutchouc en particules présentant une viscosité limite de 2 à 15 ml/g (mesurée dans la diméthylformamide à 25°C), caractérisé en ce que la réaction de greffage est effectuée en présence d'un alkylmercaptan en $C_{1-18}$ ou ses mélanges en quantités de $(0,503 \cdot x + 1,222)$% en poids à $(1,728 \cdot x + 4,197)$% en poids (par rapport à la somme des quantités de la base de caoutchouc, des monomères et du mercaptan), x étant le nombre d'atomes de carbone dans l'alkylmercaptan.

## Claims

1. Sulfur-containing, elastic/thermoplastic graft products of styrene, α-methyl styrene, p-methyl styrene, vinyl toluene, acrylonitrile or methyl methacrylate or mixtures thereof on a particulate rubber having an average particle diameter ($d_{50}$) of 0.05 to 20.0 µm and a glass temperature of $\leq 10°C$ with a total rubber content of 1 to 80% by weight, the graft products having a sulfur content of 1.15 to 3.95% by weight and the thermoplastic component of the monomers polymerized onto the particulate rubber having an intrinsic viscosity of 2 to 15 ml/g (as measured in dimethyl formamide at 25°C) and at least 90% by weight of the sulfur incorporated being present as a constituent of terminal $C_{1-18}$ thioalkyl groups.

2. A sulfur-containing elastic/thermoplastic graft product as claimed in claim 1, characterized in that it is obtained by grafting a mixture of

a) 50 to 80 parts by weight and preferably 55 to 75 parts by weight (α-methyl)styrene and/or p-methyl styrene or vinyl toluene,

b) 10 to 30 parts by weight and preferably 15 to 27.5 parts by weight (meth)acrylonitrile and

c) as many parts by weight of a $C_{1-18}$ alkyl mercaptan or mixtures thereof as required to produce a sulfur content of 1.15 to 3.95% by weight in the polymer onto

d) 10 to 200 parts by weight polybutadiene.

3. A sulfur-containing elastic/thermoplastic graft product as claimed in claim 2, characterized in that it is obtained by grafting a mixture of

a) 50 to 80 parts by weight and preferably 55 to 75 parts by weight (α-methyl)styrene and/or p-methyl styrene or vinyl toluene,

b) 10 to 30 parts by weight and preferably 15 to 27.5 parts by weight (meth)acrylonitrile and

c) 7.5 to 25 parts by weight and preferably 8 to 15 parts by weight tert. dodecyl mercaptan and/or n-dodecyl mercaptan or mixtures thereof onto

d) 10 to 200 parts by weight polybutadiene.

4. A sulfur-containing elastic/thermoplastic graft product as claimed in claim 1, characterized in that it is obtained by grafting a mixture of

a) 25 to 75 parts by weight and preferably 30 to 70 parts by weight (α-methyl)styrene and/or p-methyl styrene or vinyl toluene,

b) 25 to 75 parts by weight and preferably 30 to 70 parts by weight methyl methyacrylate and

c) as many parts by weight of $C_{1-18}$ alkyl mercaptan or mixtures thereof as required to produce a sulfur content of 1.15 to 3.95% by weight in the polymer onto

d) 10 to 200 parts by weight polybutadiene.

5. A sulfur-containing elastic/thermoplastic graft product as claimed in claim 4, characterized in that it is obtained by grafting a mixture of

a) 25 to 75 parts by weight and preferably 30 to 70 parts by weight (α-methyl)styrene and/or p-methyl styrene or vinyl toluene,

b) 25 to 75 parts by weight and preferably 30 to 70 parts by weight methyl methyacrylate and

c) 7.5 to 25 parts by weight and preferably 8 to 15 parts by weight tert. dodecyl mercaptan and/or n-dodecyl mercaptan or mixtures thereof onto

d) 10 to 200 parts by weight polybutadiene.

6. A sulfur-containing elastic/thermoplastic graft product as claimed in claim 1, characterized in that it is obtained by grafting a mixture of

a) 10 to 60 parts by weight and preferably 20 to 50 parts by weight (α-methyl)styrene and/or p-methyl styrene or vinyl toluene,

b) 10 to 60 parts by weight and preferably 20 to 50 parts by weight methyl methacrylate,

c) 10 to 30 parts by weight and preferably 15 to 27.5 parts by weight (meth)acrylonitrile and

d) as many parts by weight of $C_{1-18}$ alkyl mercaptan or mixtures thereof as required to produce a sulfur content of 1.15 to 3.95% by weight in the polymer onto

e) 10 to 200 parts by weight polybutadiene.

7. A sulfur-containing elastic/thermoplastic graft product as claimed in claim 6, characterized in that it is obtained by grafting a mixture of

a) 10 to 60 parts by weight and preferably 20 to 50 parts by weight (α-methyl)styrene and/or p-methyl styrene or vinyl toluene,

b) 10 to 60 parts by weight and preferably 20 to 50 parts by weight methyl methacrylate,

c) 10 to 30 parts by weight and preferably 15 to 27.5 parts by weight (meth)acrylonitrile and

d) 7.5 to 25 parts by weight and preferably 8 to 15 parts by weight tert. dodecyl mercaptan and/or n-dodecyl mercaptan or mixtures thereof onto

e) 10 to 200 parts by weight polybutadiene.

8. A sulfur-containing elastic/thermoplastic graft product as claimed in claim 1, characterized in that it is obtained by grafting a mixture of

a) 50 to 80 parts by weight and preferably 55 to 75 parts by weight methyl methacrylate,

b) 10 to 30 parts by weight and preferably 15 to 27.5 parts by weight (meth)acrylonitrile and

c) as many parts by weight of $C_{1-18}$ alkyl mercaptan or mixtures thereof as required to produce a sulfur content of 1.15 to 3.95% by weight in the polymer onto

d) 10 to 200 parts by weight polybutadiene.

9. A sulfur-containing elastic/thermoplastic graft product as claimed in claim 8, characterized in that it is obtained by grafting a mixture of

a) 50 to 80 parts by weight and preferably 55 to 75 parts by weight methyl methacrylate,

b) 10 to 30 parts by weight and preferably 15 to 27.5 parts by weight (meth)acrylonitrile and

c) 7.5 to 25 parts by weight tert. dodecyl mercaptan and/or n-dodecyl mercaptan or mixtures thereof onto

d) 10 to 200 parts by weight polybutadiene.

10. The use of the sulfur-containing elastic/thermoplastic graft products claimed in claims 1 to 9 as agents for improving flow and for protection against thermo-oxidative damage in ABS polymers.

11. A process for the production of sulfur-containing, elastic/thermoplastic graft products of styrene, α-methyl styrene, p-methyl styrene, vinyl toluene, acrylonitrile or methyl methacrylate or mixtures thereof on a particulate rubber having an average particle diameter ($d_{50}$) of 0.05 to 20.0 μm and a glass temperature of ≤10°C with a total rubber content of 1 to 80% by weight, the thermoplastic component of the monomers polymerized onto the particulate rubber having an intrinsic viscosity of 2 to 15 ml/g (as measured in dimethyl formamide at 25°C), characterized in that the the grafting reaction is carried out in the presence of a $C_{1-18}$ alkyl mercaptan of mixtures thereof in quantities of $(0.503 \cdot x + 1.222)\%$ by weight to $(1.728 \cdot x + 4.197)\%$ by weight (based on the sum of the rubber base and the quantities of monomers and mercaptan), x being the number of carbon atoms in the alkyl mercaptan.